# EUROPEAN PATENT APPLICATION

(11) **EP 4 674 686 A1**
(43) Date of publication of application: **07.01.2026**
(21) Application number: 24185611.1
(22) Date of filing: 01.07.2024
(51) Int. Cl.: B60P 7/14

(54) **SYSTEM FOR DIVIDING A SPACE OVER A TRUCK BED**

(71) Applicant: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(57) **Abstract**

System for dividing a space over a truck bed (1), comprising: a pair of mechanisms (4a, 4b), each configured to be slidably engageable with and fixable at different locations along a corresponding one of two guides (2a, 2b), wherein each of the guides (2a, 2b) is integrated with or fixable lengthwise along the length of a corresponding one of two sidewalls (3a, 3b) of a truck bed (1); a pair of separators (5a, 5b), each configured to be pivotably fixed to a corresponding one of the mechanisms (4a, 4b); wherein, when the guides (2a, 2b) are integrated with or fixed on the sidewalls (3a, 3b), the mechanisms (4a, 4b) are fixed along the guides (2a, 2b), and the separators (5a, 5b) are fixed on the mechanisms (4a, 4b), each mechanism (4a, 4b) is configured to pivot the corresponding separator (5a, 5b).

## Description

### TECHNICAL FIELD

The present disclosure relates to a system for dividing a space over a truck bed. The system may also be called trunk divider or truck bed divider.

### STATE OF THE ART

A truck bed is a pickup truck's rear part which is commonly used for loading thereon cargo to be transported with the truck, and typically said truck bed comprises a platform and two sidewalls which define the lateral borders of the platform and are useful for preventing the cargo from falling off the lateral sides of truck bed. Also, there are known pickup trucks which comprise additional elements or accessories at their truck beds. A known accessory for the truck bed of a pickup truck is a cover assembly which comprises a rollable curtain, i.e. a rollable cover, for covering the truck bed. A particular cover assembly that comprises a rollable curtain is described in patent application EP 4309932 A1. Another known accessory for the truck bed is a molle panel which may be attached to a sidewall of the truck bed and can serve for attaching thereon cargo, tools or other objects. Another known accessory for the truck bed is a divider for dividing the truck bed, i.e. the space over the truck bed's platform, into two or more compartments. The known dividers (i.e. truck bed dividers) typically are positioned over the truck bed such as they are substantially normal to the platform and to the two sidewalls of the truck bed. Moreover, each of the known conventional dividers typically when installed on the truck bed is fixed on the two sidewalls, with one end of the divider being fixed on one sidewall, and an opposite end of the divider being fixed on the other sidewall, such that the installed divider extends from one sidewall to the opposite sidewall and the longitudinal direction of the divider is substantially normal to the longitudinal directions of the truck bed and of the pickup truck. However, said conventional known dividers suffer from several drawbacks. One of said drawbacks is that the placement and installation of the divider, as well as the removal of the divider when the latter needs not to be used, can be a labor intensive, slow and even complex process. Also, the known conventional dividers when not to in use, need typically to be removed and stored away from the truck bed so that the divider does not obstruct the use of the track bed. Also, the known conventional dividers are not easily configurable because, typically, when such a conventional divider is installed on the truck bed, its position on the truck bed may not be changed easily.

Hence, there is a need for overcoming the drawbacks of the conventional truck bed dividers.

### DESCRIPTION OF THE INVENTION

The present invention overcomes many of the drawbacks of conventional truck bed dividers. The present invention offers a system for dividing a space over a truck bed, wherein said system advantageously is highly reconfigurable, is easy to install and operate without requiring the use of sophisticated tools, and when not in use needs not to be uninstalled and removed from the truck bed, but instead may remain on the truck bed. Moreover, said system, which may also be called divider, advantageously allows the user to change the location of the divider on the truck bed, for thereby controlling the areas into which the truck bed is divided by the divider, and also for potentially utilizing the divider for locking in place a cargo loaded on the truck bed, thereby enhancing the safety and stability of the cargo on the truck bed. Also, in at least some embodiments of the present invention the system (divider) when is not used for dividing the space over the truck bed may function as molle panels fixed on the sidewalls of the truck bed. Also, at least some embodiments of the present invention advantageously allow to use the divider in combination with a roller cover. In addition, at least some embodiment of the present invention, allow the user to utilize the divider for tying down on the latter cargo that may be loaded on the truck bed. Hence, the system offered by the present invention may advantageously act as a comprehensive solution for truck bed management for enhancing the functionality and usage efficiency of the truck bed.

An aspect of the present invention concerns a system for dividing a space over a truck bed, the system comprising: a pair of mechanisms, each configured to be slidably engageable with and fixable at different locations along a corresponding one of two guides, wherein each of the guides is integrated with or fixable lengthwise along the length of a corresponding one of two sidewalls of a truck bed; a pair of separators, each configured to be pivotably fixed to a corresponding one of the mechanisms; wherein, when the guides are integrated with or fixed on the sidewalls, the mechanisms are fixed along the guides, and the separators are fixed on the mechanisms, each mechanism is configured to pivot the corresponding separator over the truck bed between, relative to the mechanism, a first position, at which the separator is lengthwise adjacent to the corresponding guide, and a second position, at which the separator is lengthwise inclined with respect to the length direction of the corresponding guide.

It may be understood that the mechanisms advantageously allow for a user of the system to easily reposition the separators along the length direction of the guides, and this may advantageously allow for adjusting the position of the separators on the truck bed according to how the user may wish to divide the truck bed, or according to the size or position of a cargo on the truck bed. Also, it may be understood that the guides may or may not be part of the system. In particular, as mentioned above the guides may be integrated with the sidewalls of the truck bed, in which case said guides may be considered as part of the truck bed. In the latter case, it may be understood that each of the guides is arranged lengthwise along the length of a corresponding one of the two sidewalls of a truck bed. Alternatively, as mentioned further above, the guides may be fixable lengthwise along the length of a corresponding one of the two sidewalls of a truck bed. In the latter case, said guides may be provided as part of the system of the invention, or it may be provided separately from said system. For example, when said guides are fixable on the sidewalls of the truck bed but are not part of the system, said guides may first be installed and fixed on the sidewalls, and then the mechanisms and separators of the system may be installed on the guides. However, in a preferred embodiment of the invention, the system comprises the guides.

As mentioned further above, each mechanism is configured to pivot the corresponding separator over the truck bed between, relative to the mechanism, the aforementioned first position and second position. It may be understood that at their second positions the separators may be considered as being deployed over the truck bed, thereby the separators advantageously dividing, i.e. separating into different regions, the space over the truck. For this reason, the second position of each separator relative to its corresponding mechanism may also be referred to as the deployed position. Likewise, it may be understood that at first positions the separators may be considered as being retracted from over the truck bed, thereby the separators no longer dividing, i.e. separating into different regions, the space over the truck. For this reason, the first position of each separator relative to its corresponding mechanism may also be referred to as the retracted position. Overall, from the above it may be further understood that the mechanisms may advantageously allow for moving the separators between said deployed and retracted positions such that when the system installed on the truck bed but the latter needs not to be divided into different sections/regions, the separators and the overall system needs not to be removed from the truck bed, but instead may conveniently remain on the truck bed with the separators turned to their retracted positions. Hence, the system may advantageously provide to its use convenience and utility.

In the system according to the invention preferably each separator at the corresponding second position lengthwise extends substantially along a width of the truck bed; and/or each separator at the corresponding second position lengthwise is substantially normal to the length direction of the corresponding guide. When the system is installed on the truck bed and the separators are lengthwise arranged along the width of the truck bed and/or said separators are lengthwise normal to the length directions of the guides, the orientation of the separators at their corresponding second positions may advantageously contribute to optimizing the use of the space over the truck bed. It is noted that said space over the truck bed may also be called cargo space because it can be used for storing there a cargo. Also, in a preferred embodiment of the invention, when the system is installed, each separator at the corresponding first position lengthwise is substantially parallel to the length direction of the corresponding guide. In the latter case the orientation of the separators may advantageously allow for maximizing the available cargo space over the truck bed.

In a preferred embodiment of the invention the separators are configured to lock to each other when they are at their corresponding second positions and the pair of mechanisms are at corresponding equivalent locations along the corresponding guides. In the latter case, when the separators are interlocking with this other, this may advantageously contribute to robustly keeping the separators in place while the system is in use, thereby further enhancing the system's safety and stability via preventing the separators and any cargo potentially attached to, or restricted by, the separators from randomly moving or shifting on the truck bed.

In a preferred embodiment of the invention, each separator comprises a corresponding hollow bar, and the system further comprises a locking bar which comprises a first portion and a second portion and is configured to slide through the two hollow bars between an unlocking position at which the first and second portions are inside the hollow bar of a first one of the separators, and a locking position at which the first portion is inside the hollow bar of the first separator and the second portion is inside the hollow bar of a second one of the separators. In the latter case, the configuration of the system may advantageously enable an interlocking, via the locking bar, of the two separators with each other when the locking bar is at the locking position. Said interlocking, as mentioned further above, may contribute to preventing a shifting or moving of the separators and/or of a cargo potentially attached to the separators when the system is in use. It is noted that said locking bar may also be called latch. It is also noted that preferably the aforementioned hollow bar of the first separator comprises a slit which is adjacent to the first portion, and also preferably the system further comprises a handle which projects from the first portion and extends through the slit and is configured to slide along the slit when the locking bar moves between the locking position and the unlocking position. In the latter case, the aforementioned handle and slit may advantageously contribute to improving the user friendliness of the system via facilitating the handling of the latch by a user so that the user may easily lock and unlock the separators to/from each other.

In a preferred embodiment of the invention each separator comprises a plurality of openings, preferably each separator comprising a grid or grid-like structure which comprises said openings. Said openings, especially when they are arranged into forming a grid, may advantageously facilitate the potential use of the separators for attaching, hanging or fixing thereon, particularly on the openings, any cargo or tools that may be transported on the truck bed during a use of the system. Hence, in a preferred embodiment wherein each separator comprises a corresponding grid which comprises openings, each grid may advantageously enable the corresponding separator to function as a molle panel when the system is installed on a truck bed, the separator is at the aforementioned first position relative to the corresponding mechanism, and the mechanism that is attached to the separator and the corresponding guide is, along the latter, at the parking location that is mentioned in this text further below.

In a preferred embodiment of the invention each separator comprises a corresponding first section and a corresponding second section which is attachable to the corresponding mechanism, wherein the width of the first section of the separator is smaller than the width of the second section of the separator. In the latter case, the smaller width of the first section compared to the second section may advantageously allow the use of the system on trucks wherein close to the sidewalls of the truck bed the latter comprises protrusions at the intersections between the sidewalls and the floor of the truck bed. In some pickup truck models the presence of said protrusions or pumps in between the floor and sidewalls of the truck bed may be related to the presence of vehicle wheels below said protrusions. When such protrusions are present on the truck bed, the use of a system wherein each separator has the aforementioned first and second sections of different widths, the smaller width of the first section may advantageously allow the separator to move along the corresponding guide and sidewall without being obstructed by the protrusion located at the sidewall.

In a preferred embodiment which in this text is called "exemplary embodiment" of the invention, the system further comprises a pair of stoppers, each configured to be fixed on a corresponding one of the guides and to interlock with a corresponding one of the separators when said corresponding separator is fixed, via the corresponding mechanism, at a parking location along the corresponding guide, and the corresponding separator is at the first position relative to the mechanism. It is noted that when the separator is at its corresponding parking location and first position, it may be said that the separator is at a parking state on the truck bed. In the latter case, the stoppers and their potential interlocking with the separators when the latter are at their corresponding parking states may advantageously prevent the separators from moving uncontrollably on the truck bed when the system/divider is installed on the truck bed but is not in use. Hence, the aforementioned stoppers may advantageously contribute to improving the safety and reconfigurability of the system.

In a embodiment which is according to the aforementioned exemplary embodiment, each separator at an extreme of the same comprises a corresponding opening, and each stopper comprises a corresponding holder that is attachable to the corresponding guide at which the stopper is fixable, and the stopper further comprises a corresponding projection which is fixable on the holder and is configured to insert in and interlock with the opening of the corresponding separator when the latter is fixed, via the corresponding mechanism, at a parking location along the corresponding guide, and the corresponding separator is at the first position relative to the mechanism. In the latter embodiment, the aforementioned opening at the extreme of the separator, in combination with the aforementioned protrusion of the stopper, may advantageously provide for a simple but robust way of interlocking the stopper with the separator. Also, in a preferred embodiment which is according to the previous one, the holder and the projection of the stopper are configured to controllably interlock with each other such that the projection is fixable on different positions on the holder. In the latter case, the ability to fix the projection at different positions on the holder, may allow for adjusting the location of the stopper's projection according to the location of the separator when the latter is at its parking state, such that the projection may insert in the opening at the extreme of the separator.

In a preferred embodiment of the invention each mechanism is configured to engage and interlock with the corresponding guide such that the mechanism is slidable along at least a portion of the guide while remaining interlocked with the guide. More preferably, the guide is also configured to engage and interlock with the corresponding mechanism such that the mechanism is slidable along at least a portion of the guide while remaining interlocked with the guide. In the latter case, further preferably the mechanism comprises locking means configured to controllably lock a location of the mechanism along the guide. When the mechanism can slide along the guide while remaining engaged and interlocked with the guide, this may contribute to the safety and ease of use of the system by the user. Also, the aforementioned locking means may facilitate the fixing by the user of the separators on different locations along the truck bed.

In a preferred embodiment of the invention each guide along a side of the same comprises a pair of projections which extend along the length of the guide and are spaced apart such that between them an opening is formed, and the guide also comprises a hollow channel which extends along the length of the guide, wherein a side of the hollow channel is partially enclosed by the pair of projections; and each mechanism comprises a first part which is configured to fit inside and slide along the hollow channel of the guide, a second part which is configured to slide along the guide while being outside the hollow channel, and connectors which are configured to cross through the opening between the pair of projections and connect the first and the second part of the mechanism. In the latter case, the aforementioned respective configurations of the guides and of the mechanisms may advantageously facilitate the occurrence of an interlocking between each guide and its corresponding mechanism when the system is installed on the truck bed, such that the separators can slide along the truck bed while remaining engaged and connected with the guides.

In a preferred embodiment which is according to the previous one, each mechanism further comprises one or more tighteners configured to firmly tighten together the guide and the first and second parts of the mechanism. It may be understood that said tighteners may advantageously contribute to the safety of the system, and may further facilitate the fixing, by the user, of the mechanisms and separators on different locations along the guide.

In a very preferred embodiment of the invention each mechanism is further configured to adjust a height position of the separator with respect to a floor of the truck bed when the system is installed on the truck bed i.e. when the guides are integrated with or fixed on the sidewalls, the mechanisms are fixed along the guides, and the separators are fixed on the mechanisms. The ability to adjust the height position of the separator with respect to the floor of the truck bed may advantageously contribute to the reconfigurability of the system such that the latter may be used on a variety of different types of truck beds and pick up trucks, among which the position of the guides on the truck bed's sidewalls may vary.

In a preferred embodiment of the invention each mechanism comprises a hinge attachable to the corresponding separator for pivoting the latter between the first position and the second position with respect to the mechanism. In the latter case, the hinge may advantageously provide for a simple yet efficient and reliable way for the pivoting of the separator.

In a preferred embodiment of the invention the system further comprises a rollable cover which is arrangeable on the two sidewalls of the truck bed for controllably covering the latter, preferably the rollable cover comprising two cover guides which are fixable lengthwise to and arrangeable along the length of a corresponding one of the two sidewalls of the truck bed, and also preferably each cover guide is connected to a corresponding one of the guides with which the mechanisms are engageable. In the latter case, the rollable cover may advantageously contribute to improving the functionality of the overall system so that the latter offers to its user the ability to simultaneously divide a cargo space of the truck bed and also protect, via the roller, the truck bed or any cargo loaded on the truck bed.

In a preferred embodiment of the invention each mechanism is further configured to controllably fix the corresponding separator at different locations along a direction which is normal to the length direction of the guide and/or of the truck bed when the system is installed on the truck bed. In the latter case, the configuration of the mechanism may advantageously facilitate the ability to use the system on different truck beds of different widths or distances between the sidewalls, and may also advantageously facilitate the adjustment of the separators positions such that when the latter are deployed i.e. they are at their corresponding second positions, the distance between the separators may be minimized for avoiding the movement of cargo between the deployed separators. It is noted that when the guides are integrated with or fixed on the sidewalls of the truck bed, the length direction of each guide may or may not be the same as the length direction of the truck bed. It is also noted that typically the length direction of the truck bed is the same as the length direction, i.e. the longitudinal direction, of the pickup truck which comprises the truck bed.

In a preferred embodiment of the invention each separator comprises a corresponding hollow bar and a corresponding connection bar which, at least partially, fits inside the hollow bar and is lengthwise slidable through the hollow bar such that the connection bar is movable with respect to the hollow bar between a first position at which a portion of the connection bar is inside the hollow bar of the separator, and a second position at which the portion of the connection bar is outside the hollow bar and projects from an extreme of said hollow bar, and wherein the separator is connectable to the corresponding mechanism via said portion of the connection bar. In the latter case, the configuration of said hollow bar and connection bar may advantageously facilitate the reconfigurability of the system such that the user of the system may adjust, in a simple yet reliable and robust way, the distance between the separators when the latter are deployed over the truck bed, and also so that system may be used on different truck beds of different widths or distances between the sidewalls.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Fig. 1 illustrates a pickup truck with installed thereon a preferred embodiment of a system according to the invention.
Fig. 2 illustrates the embodiment of Fig. 1 but with the separators of the system at different locations above the truck bed of the pickup truck compared to Fig. 1.
Fig. 3 illustrates the embodiment of Fig. 1 from a different perspective compared to Fig. 1.
Fig. 4 illustrates part of truck bed with installed thereon a preferred embodiment of a system according to the invention.
Fig. 5 illustrates part of the preferred embodiment of Fig. 4.
Fig. 6 illustrates part of the embodiment of Fig. 1, but with one of the system's separators being at a different location above the truck bed compared Fig. 1.
Fig. 7 illustrates part of the embodiment of Fig. 1, but with one of the system's separators being at a different location above the truck bed compared Fig. 1.
Fig. 8 illustrates part of the embodiment of Fig. 1, but with one of the system's separators being at a different location above the truck bed compared Fig. 1.
Fig. 9 illustrates part of the embodiment of Fig. 1, but with one of the system's separators being at a different location above the truck bed compared Fig. 1.
Fig. 10 illustrates part of the system of Fig. 1.
Fig. 11 illustrates a pickup truck with installed thereon a preferred embodiment of a system according to the invention.
Fig. 12 illustrates the embodiment of Fig. 11 at a moment during an operation of the system.
Fig. 13 illustrates part of the embodiment of Fig. 11 at a moment during an operation of the system.
Fig. 14 illustrates part of the embodiment of Fig. 11 at a moment during an operation of the system.
Fig. 15 illustrates part of the embodiment of Fig. 11 at a moment during an operation of the system.
Fig. 16 illustrates pairs of separators of some preferred embodiments of systems according to the invention.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and methods according to the invention.

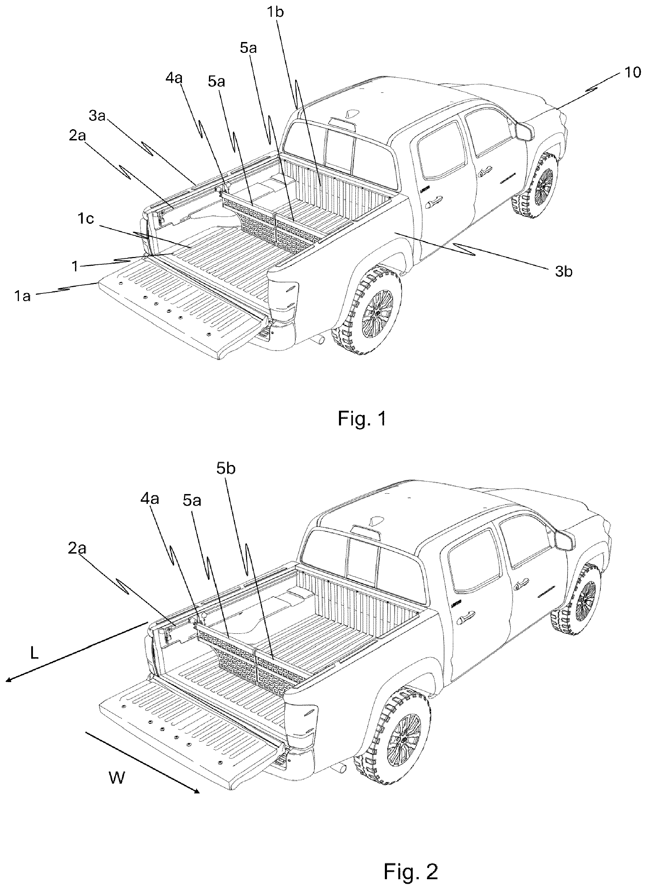

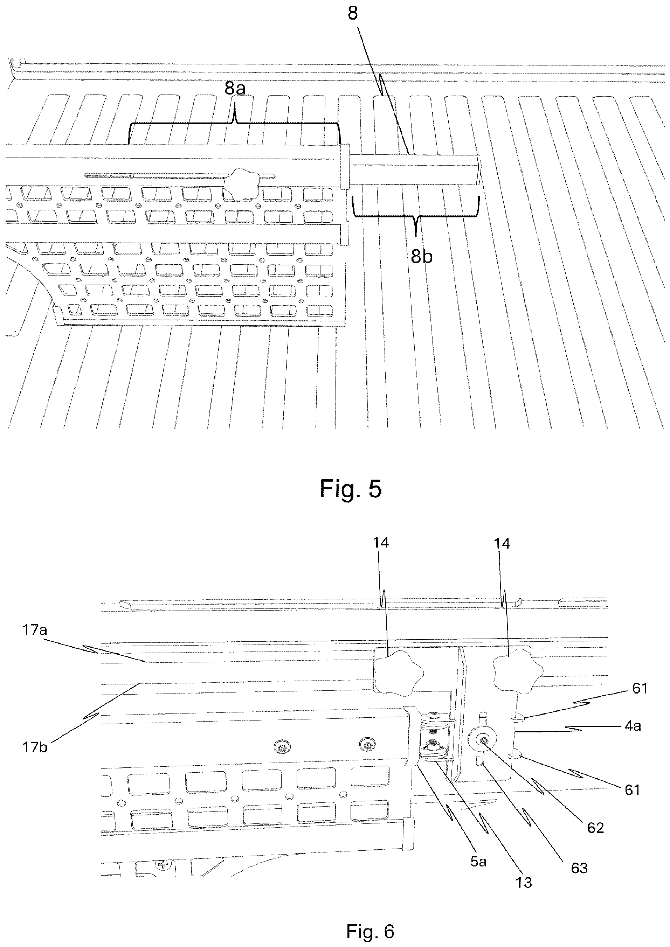

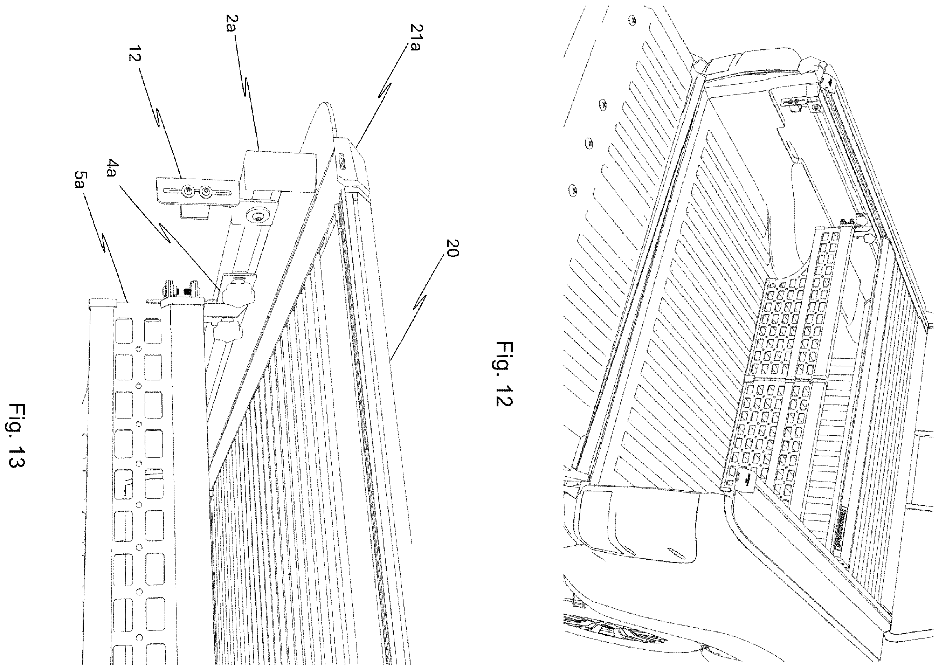

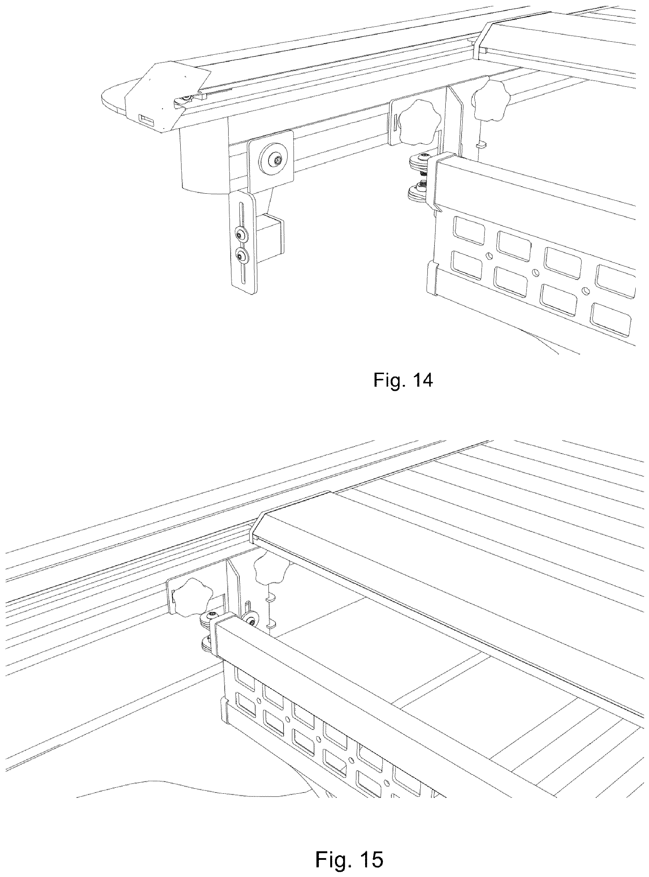

Particular embodiments of the invention are described below with reference to Fig. 1-16. Fig. 1-3 and Fig. 6-10 illustrate a preferred embodiment of a system according to the invention, wherein said system is mounted on a truck bed 1 of a truck 10 which is a pickup truck, wherein said truck bed comprises a back door 1a, a front side 1b and a floor 1c. The system of Fig. 1 comprises a pair of mechanisms 4a, 4b and a pair of separators 5a, 5b. Each of the mechanisms 4a, 4b is configured to be slidably engageable with and fixable at different locations along a corresponding one of two guides 2a, 2b. In the embodiment of Fig. 1 each of the guides 2a, 2b is fixed lengthwise along the length of a corresponding one of two sidewalls 3a, 3b of the truck bed 1. Also, in the embodiment of Fig. 1, each of the separators 5a, 5b is configured to be pivotably fixed to a corresponding one of the mechanisms 4a, 4b. Hence, in the system of Fig. 1, a first one 5a of the separators is attached to a first one 2a of the guides via a first one 4a of the mechanisms 4a, and a second one 5b of the separators is attached to a second one 2b of the guides via a second one 4b of the mechanisms. As is illustrated by Fig. 1-3 and Fig. 6-10, when the system of Fig. 1 is installed on the truck bed, the mechanisms 4a, 4b are fixed along the guides 2a, 2b, and the separators 5a, 5b are fixed on the mechanisms 4a, 4b. Moreover, in the embodiment of Fig. 1 each mechanism 4a, 4b is configured to pivot the corresponding separator 5a, 5b over the truck bed 1 between, relative to the mechanism 4a, 4b, a first position, at which the separator 5a, 5b is lengthwise adjacent to the corresponding guide 2a, 2b, and a second position, at which the separator 5a, 5b is lengthwise inclined with respect to the length direction L of the corresponding guide 2a, 2b. It is noted that Fig. 1-3 show the system's separators 5a, 5b being, with respect to the corresponding mechanisms, at their corresponding second positions, while Fig. 6-8 shown the first separator 5a being, with respect to the first mechanism 4a, at its corresponding first position. Moreover, Fig. 1 shows the system in a state at which each of the mechanisms 4a, 4b are, with respect to each other, at corresponding equivalent locations along the corresponding guides. Moreover, in the system of Fig. 1, each separator 5a, 5b at the corresponding second position lengthwise extends substantially along a width of the truck bed 1; and also, each separator 5a, 5b at the corresponding second position lengthwise is substantially normal to the length direction L of the corresponding guide 2a, 2b. Moreover, in the embodiment of Fig. 1-3 each separator 5a, 5b is made of aluminum and comprises a grid which comprises a plurality of openings 6. Said openings 6 may be used for facilitating the potential attachment on the separators of cargo loaded on the truck bed. It is noted that the separators of the embodiment of Fig. 1 may also be called panels or molle panels.

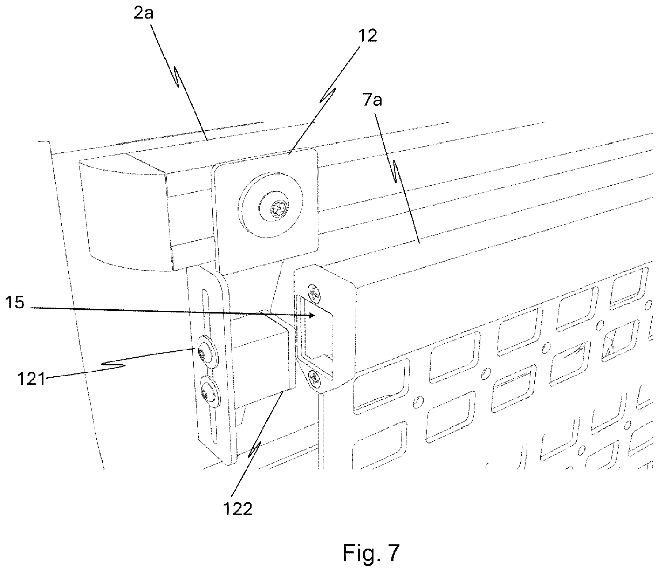

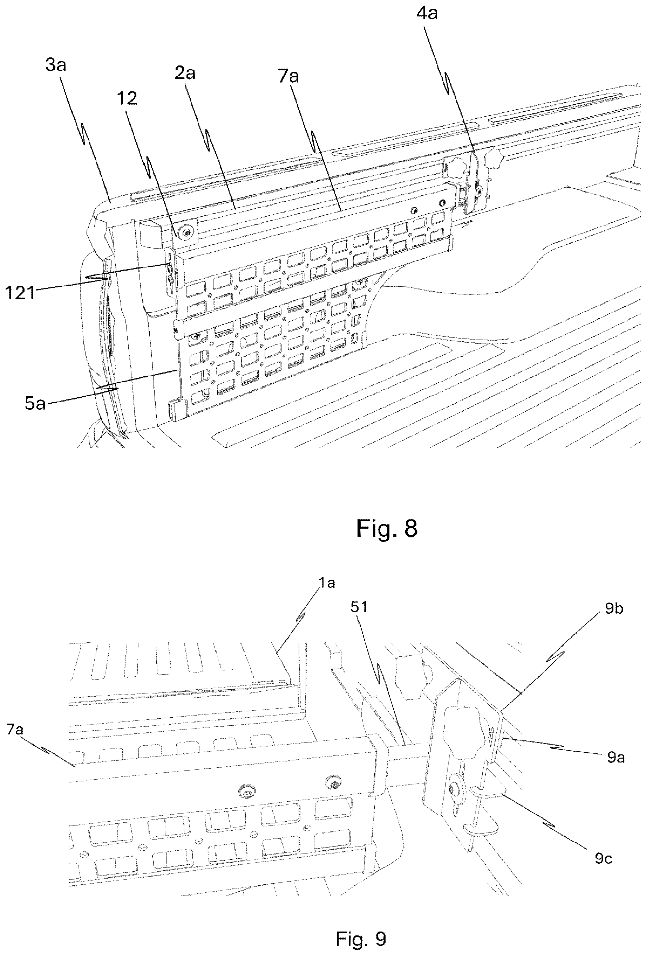

The embodiment of Fig. 1-3 and Fig. 6-10 further comprises a pair of stoppers 12. Each one the stoppers 12 is configured to be fixed on a corresponding one of the guides 2a, 2b and to interlock with a corresponding one of the separators 5a, 5b when said corresponding separator 5a, 5b is fixed, via the corresponding mechanism 4a, 4b, at a parking location along the corresponding guide 2a, 2b, and the corresponding separator 5a, 5b is at the first position relative to the mechanism 4a, 4b. Fig. 7 illustrates the system of Fig. 1 at a state/moment in which the first separator 5a although is at its corresponding first position with respect to the first mechanism 5a, is not at its corresponding parking location along the first guide 2a. Consequently, in the system's state that is illustrated by Fig. 7, the first separator is not interlocked with the corresponding stopper that is also fixed and attached to the first guide 2a. However, as Fig. 8 illustrates, when the first separator 5a is both at its first position with respect to the first mechanism 4a, and at its parking location along the first guide 2a, then first separator interlocks with the corresponding stopper 12 so that the separator remains parked, secured and lengthwise adjacent to the first sidewall 3a. It is noted that in the system of Fig. 1, when any of the separators is at the state shown in Fig. 8, then the separator advantageously functions as a molle panel. It is also noted that in the embodiment of Fig. 1-3 and Fig. 6-10, for facilitating the aforementioned interlocking of the separators with the stoppers, each separator 5a, 5b at an extreme of the same comprises a corresponding opening 15, and each stopper 12 comprises a corresponding holder 121 that is attached to the corresponding guide 2a, 2b at which the stopper is fixed. Moreover, each stopper further comprises a corresponding projection 122 which is fixed on the holder 121 and is configured to insert in, and interlock with, the opening of the corresponding separator 5a, 5b when the latter is fixed, via the corresponding mechanism 4a, 4b, at the parking location along the corresponding guide 2a, 2b, and the corresponding separator 5a, 5b is at the first position relative to the mechanism 4a, 4b. Also, in the embodiment of Fig. 1-3 and Fig. 6-10, the corresponding holder 121 and projection 122 of each stopper interlock with each other such that the projection 122 is fixable on different positions on the holder 121. In particular, in the embodiment of Fig. 1-3 and Fig. 6-10 the holder is configured to enable the projection 122 to be positioned at different height positions with respect to the floor 1c of the truck bed. This advantageously allows the user of the system to align, during a setup or re-configuration of the system, the stopper's projection 122 with the opening 15 of the corresponding separator.

In addition, in the embodiment of Fig. 1-3 and Fig. 6-10, each mechanism 4a, 4b is configured to engage and interlock with the corresponding guide such that the mechanism 4a, 4b is slidable along the guide 2a, 2b while remaining interlocked with the guide. For this purpose, in the embodiment of Fig. 1-3 and Fig. 6-10, each of the guides 2a, 2b comprises a pair of projections 17a, 17b which extend along the length of the guide 2a, 2b and are spaced apart such that between them an opening is formed, and the guide 2a, 2b also comprises a hollow channel which extends along the length of the guide. In the embodiment of Fig. 1, said hollow channel is a c-channel, and a side of said hollow channel (i.e. c-channel) is partially enclosed by the pair of projections 17a, 17b. In addition, in the embodiment of Fig. 1, each mechanism 4a, 4b comprises a first part 9a which is configured to fit inside and slide along the hollow channel of the guide, a second part 9b which is configured to slide along the guide 2a, 2b while being outside the hollow channel, and connectors which are configured to cross through the opening between the pair of projections 17a, 17b and connect the first part 9a of the mechanism to the second part 9b of the mechanism. Moreover, each of the mechanisms 4a, 4b of the embodiment of Fig. 1 comprises locking means 14 which is configured to controllably lock a location of the mechanism 4a, 4b along the guide 2a, 2b. In the embodiment of Fig. 1 said locking means 12 comprise a pair of tighteners which are configured to firmly tighten together the guide 2a, 2b and the first and second parts of the mechanism. In the embodiment of Fig. 1 said tighteners are screwed on the aforementioned connectors that connect the first and second parts 9a, 9b of each mechanism 4a, 4b. It is noted that in the case of the embodiment of Fig. 1, said mechanisms 4a, 4b may also be called brackets due to their functionality of hanging from the c-channels for attaching on the latter the separators.

In addition, in the embodiment of Fig. 1-3 and Fig. 6-10, each mechanism 4a, 4b is further configured to adjust a height position of the separator with respect to a floor of the truck bed when the system is installed on the truck bed. Hence, in the embodiment of Fig. 1-3 and Fig. 6-10 each mechanism 4a, 4b is further configured to controllably fix the corresponding separator 5a, 5b at different locations along a direction which is normal to the floor 1c of the truck bed when the system is installed on the truck bed. For this purpose, each mechanism 4a, 4b comprises a corresponding third part 9c which is connected to the second part 9b, and said third part's location with respect to said second part 9b and along a direction which is normal to the floor 1c of the truck bed 1 can be adjusted. In particular, as is illustrated by Fig. 6 and Fig. 9, said third part 9c comprises a pair of hooks 61 that engage with the second part 9b, and the exact location of the third part 9c along said second part 9b can be adjusted and firmly fixed via a screw 62 which is attached to the second and third parts 9b, 9c, crosses a slit 63 of the second part 9b, and can be tightened at different locations along said slit 63. It is noted that, said third part 9c of each mechanism 4a, 4b of the embodiment of Fig. 6, further comprises a corresponding hinge 13 which is attached to the corresponding separator 5a, 5b for pivoting the latter between the first position and the second position with respect to the mechanism 4a, 4b.

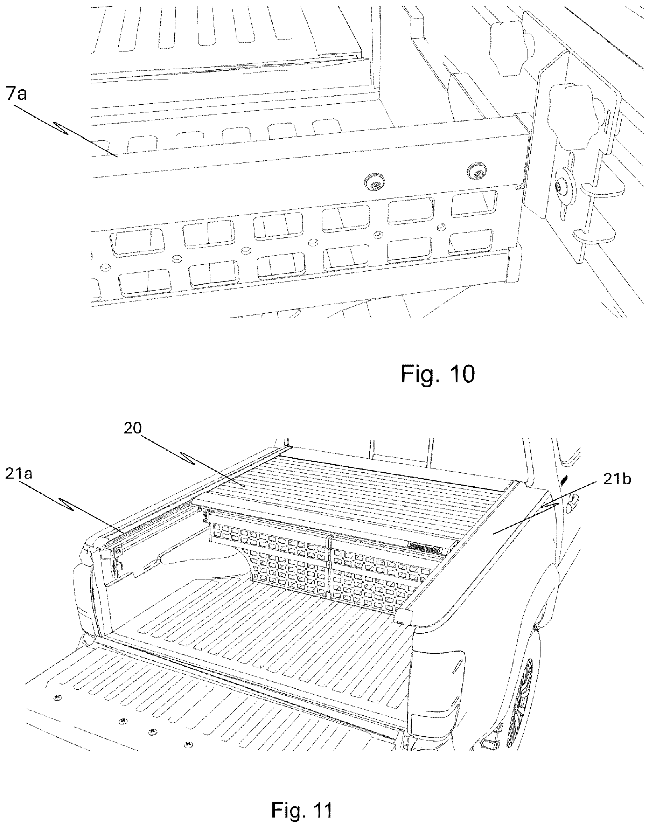

In addition, in the embodiment of Fig. 1-3 and Fig. 6-10 each separator 5a, 5b comprises a corresponding hollow bar 7a, 7b and a corresponding connection bar 51. The latter partially fits inside the corresponding hollow bar 7a, 7b and is lengthwise slidable through the hollow bar 7a, 7b such that the connection bar is movable with respect to the hollow bar 7a, 7b between a first position at which a portion of the connection bar 51 is inside the hollow bar 7a, 7b of the separator, and a second position at which the portion of the connection bar 51 is outside the hollow bar 7a, 7b. At said second position of the connection bar 51 the latter projects from an extreme of the hollow bar 7a, 7b as shown in Fig. 9 which illustrates the system in a state in which the connection bar 51 of the first separator is at the second position with respect to the separator's hollow bar 7a. Fig. 9 further illustrates that the separator is connectable to the corresponding mechanism via said portion of the connection bar 51. In contrast to Fig. 9, Fig. 10 illustrates the connection bar 51 being at the first position with respect to the hollow bar 7a of the first separator. Also, in the system of Fig. 1-3 and Fig. 6-10, each mechanism 4a, 4b is configured to controllably fix the corresponding separator 5a, 5b at different locations along a direction which is normal to the length direction of the guide 2a, 2b and of the truck bed 1 when the system is installed on the truck bed 1.

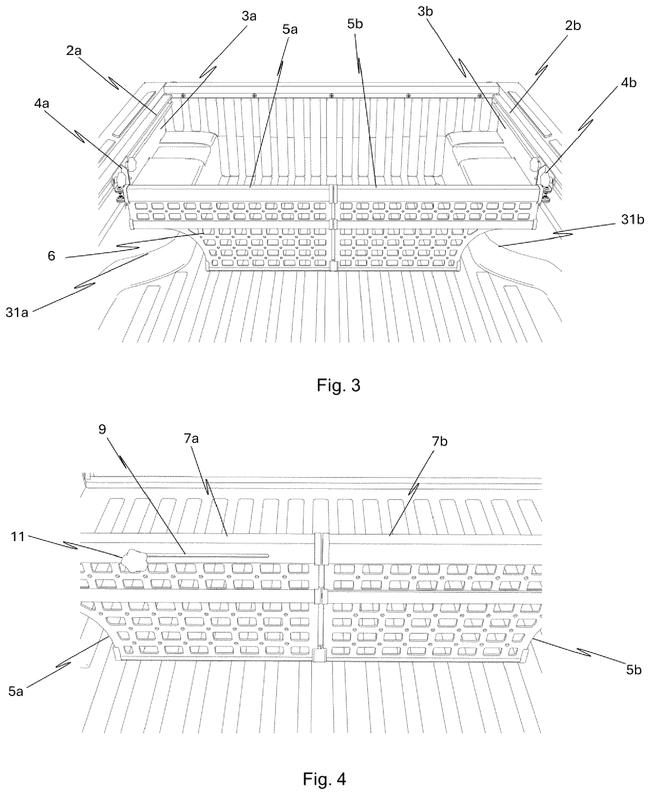

Fig. 4 and Fig. 5 show part of an embodiment which has all the features and hence is according to the embodiment of Fig. 1. Also, in the system of Fig. 4-5 the separators 5a, 5b are configured to lock to each other when they are at their corresponding second positions and the pair of mechanisms 4a, 4b are, with respect to each other, at corresponding equivalent locations along the corresponding guides 2a, 2b. For achieving the interlocking between the separators of the embodiment of Fig. 4-5, each separator 5a, 5b comprises its aforementioned corresponding hollow bar 7a, 7b, and the system of Fig. 4-5 further comprises a locking bar 8 which comprises a first portion 8a and a second portion 8b. Said locking bar 8 is configured to slide through the hollow bars 7a, 7b between an unlocking position at which the first and second portions 8a, 8b are inside the hollow bar 7a of the first separator 5a, and a locking position at which the first portion 8a is inside the hollow bar 7a of the first separator 5a and the second portion 8b is inside the hollow bar 7b of the second separator 5b. Fig. 5 shows the locking bar 8 being at the second position, while Fig. 4 shows the system in a state at which the two separators 5a, 5b are not interlocked with each other because the locking bar 8 is at the first position. Also, in the embodiment of Fig. 4-5 the hollow bar 7a of the first separator 5a comprises a slit 9 which is adjacent to the first portion 8a, and the system further comprises a handle 11 which projects from the first portion 8a and extends through the slit 9 and is configured to slide along the slit 9 when the locking bar 8 moves between the locking position and the unlocking position. Said handle facilitates the handling of the locking bar 8 by a user of the system.

Fig. 11-15 illustrate a preferred embodiment of a system according to the invention. The embodiment of Fig 11-15 is according to the one of Fig. 1, and moreover comprises a rollable cover 20 which is arranged on the two sidewalls of the truck bed 1 and serves for controllably covering the truck bed. Said rollable cover 20 comprises two cover guides 21a, 21b. Each of said cover guides is fixed and arranged lengthwise along the length of a corresponding one of the two sidewalls of the truck bed, and each cover guide 21a, 21b is connected to a corresponding one of the guides 2a, 2b.

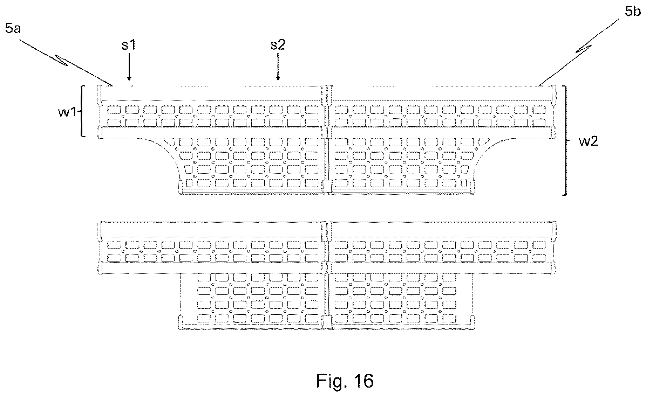

Fig. 16 shows different pairs of separators of different preferred embodiments of the invention. It is noted that the separators of each of the embodiments of Fig. 1 and Fig. 11 is according to one of the pairs shown in Fig. 16. Moreover, in each one of the pairs illustrated by Fig. 16, each separator 5a, 5b comprises a corresponding first section s1 and a corresponding second section s2 which is attachable to the corresponding mechanism 4a, 4b, wherein the width w1 of the first section s1 of the separator 5a, 5b is smaller than the width w2 of the second section s2 of the separator 5a, 5b. In the case of the embodiment of Fig. 1-3, the smaller width of the first section s1 of each separator compared to the latter's second section s2, allows the separators to slide and be fixed over bumps/protrusions 31a, 31b which exist on the floor 1c and the sidewalls 3a, 3b close to the front side 1b of the truck bed 1 of the pickup truck 10 shown in Fig. 1.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. System for dividing a space over a truck bed (1), comprising:
a pair of mechanisms (4a, 4b), each configured to be slidably engageable with and fixable at different locations along a corresponding one of two guides (2a, 2b), wherein each of the guides (2a, 2b) is integrated with or fixable lengthwise along the length of a corresponding one of two sidewalls (3a, 3b) of a truck bed (1);
a pair of separators (5a, 5b), each configured to be pivotably fixed to a corresponding one of the mechanisms (4a, 4b);
wherein, when the guides (2a, 2b) are integrated with or fixed on the sidewalls (3a, 3b), the mechanisms (4a, 4b) are fixed along the guides (2a, 2b), and the separators (5a, 5b) are fixed on the mechanisms (4a, 4b),
each mechanism (4a, 4b) is configured to pivot the corresponding separator (5a, 5b) over the truck bed (1) between, relative to the mechanism (4a, 4b), a first position, at which the separator (5a, 5b) is lengthwise adjacent to the corresponding guide (2a, 2b), and a second position, at which the separator (5a, 5b) is lengthwise inclined with respect to the length direction (L) of the corresponding guide (2a, 2b).

2. A system according to claim 1, wherein each separator (5a, 5b) at the corresponding second position lengthwise extends substantially along a width of the truck bed (1); and/or each separator (5a, 5b) at the corresponding second position lengthwise is substantially normal to the length direction (L) of the corresponding guide (2a, 2b).

3. A system according to any of the preceding claims, wherein the separators (5a, 5b) are configured to lock to each other when they are at their corresponding second positions and the pair of mechanisms (4a, 4b) are at corresponding equivalent locations along the corresponding guides (2a, 2b).

4. A system according to any of the preceding claims, wherein each separator (5a, 5b) comprises a plurality of openings (6), preferably each separator (5a, 5b) comprising a grid or grid-like structure which comprises said openings (6).

5. A system according to any of the preceding claims, wherein each separator (5a, 5b) comprises a corresponding hollow bar (7a, 7b), and the system further comprises a locking bar (8) which comprises a first portion (8a) and a second portion (8b) and is configured to slide through the hollow bars (7a, 7b) between an unlocking position at which the first and second portions ( 8a, 8b) are inside the hollow bar (7a) of the a first one (5a) of the separators (5a, 5b), and a locking position at which the first portion (8a) is inside the hollow bar (7a) of the first separator (5a) and the second portion (8b) is inside the hollow bar (7b) of a second one (5b) of the separators (5a, 5b), preferably the hollow bar (7a) of the first separator (5a) comprising a slit (9) which is adjacent to the first portion (8a), and also preferably the system further comprising a handle (11) which projects from the first portion (8a) and extends through the slit (9) and is configured to slide along the slit (9) when the locking bar (8) moves between the locking position and the unlocking position.

6. A system according to any of the preceding claims, wherein each separator (5a, 5b) comprises a corresponding first section (s1) and a corresponding second section (s2) which is attachable to the corresponding mechanism (4a, 4b), wherein the width (w1) of the first section (s1) of the separator (5a, 5b) is smaller than the width (w2) of the second section (s2) of the separator (5a, 5b).

7. A system according to any of the preceding claims, further comprising a pair of stoppers (12), each configured to be fixed on a corresponding one of the guides (2a, 2b) and to interlock with a corresponding one of the separators (5a, 5b) when said corresponding separator (5a, 5b) is fixed, via the corresponding mechanism (4a, 4b), at a parking location along the corresponding guide (2a, 2b), and the corresponding separator (5a, 5b) is at the first position relative to the mechanism (4a, 4b).

8. A system according to claim 7, wherein each separator (5a, 5b) at an extreme of the same comprises a corresponding opening (15), and each stopper (12) comprises a corresponding holder (121) that is attachable to the corresponding guide (2a, 2b) at which the stopper is fixable, and the stopper further comprises a corresponding projection (122) which is fixable on the holder (121) and configured to insert in and interlock with the opening of the corresponding separator (5a, 5b) when the latter is fixed, via the corresponding mechanism (4a, 4b), at the parking location along the corresponding guide (2a, 2b), and the corresponding separator (5a, 5b) is at the first position relative to the mechanism (4a, 4b), preferably the holder (121) and the projection (122) of the stopper being configured to controllably interlock with each other such that the projection (122) is fixable on different positions on the holder (121).

9. A system according to each of the preceding claims, wherein each mechanism (4a, 4b) is configured to engage and interlock with the corresponding guide such that the mechanism (4a, 4b) is slidable along at least a portion of the guide (2a, 2b) while remaining interlocked with the guide, preferably the mechanism (4a, 4b) comprising locking means (14) configured to controllably lock a location of the mechanism (4a, 4b) along the guide (2a, 2b).

10. A system according any of the previous claims, wherein each guide (2a, 2b) along a side of the same comprises a pair of projections (17a, 17b) which extend along the length of the guide (2a, 2b) and are spaced apart such that between them an opening is formed, and the guide (2a, 2b) also comprises a hollow channel which extends along the length of the guide, wherein a side of the hollow channel is partially enclosed by the pair of projections (17a, 17b); and
each mechanism (4a, 4b) comprises a first part (9a) which is configured to fit inside and slide along the hollow channel of the guide, a second part (9b) which is configured to slide along the guide (2a, 2b) while being outside the hollow channel, and connectors which are configured to cross through the opening between the pair of projections and connect the first and the second part of the mechanism.

11. A system according to claim 10, wherein each mechanism (4a, 4b) comprises one or more tighteners configured to firmly tighten together the guide (2a, 2b) and the first and second parts of the mechanism.

12. A system according to any of the previous claims, wherein each mechanism (4a, 4b) comprises a hinge (13) attachable to the corresponding separator (5a, 5b) for pivoting the latter between the first position and the second position with respect to the mechanism (4a, 4b).

13. A system according to any of the previous claims, further comprises a rollable cover (20) which is arrangeable on the two sidewalls (3a, 3b) of the truck bed (1) for controllably covering the latter, preferably the rollable cover (20) comprising two cover guides (21a, 21b) which are fixable lengthwise to and arrangeable along the length of a corresponding one of the two sidewalls (3a, 3b) of the truck bed (1), and each cover guide (21a, 21b) is connected to a corresponding one of the guides (2a, 2b).

14. A system according to any of the previous claims, wherein each mechanism 4a, 4b is further configured to controllably fix the corresponding separator (5a, 5b) at different locations along a direction which is normal to a floor (1c) of the truck bed (1) when the system is installed on the truck bed (1).

15. A system according to any of the previous claims, wherein each separator (5a, 5b) comprises a corresponding hollow bar (7a, 7b) and a corresponding connection bar (51) which, at least partially, fits inside the hollow bar (7a, 7b) and is lengthwise slidable through the hollow bar (7a, 7b) such that the connection bar is movable with respect to the hollow bar (7a, 7b) between a first position at which a portion of the connection bar (51) is inside the hollow bar (7a, 7b) of the separator, and a second position at which the portion of the connection bar (51) is outside the hollow bar (7a, 7b) and projects from an extreme of said hollow bar (7a, 7b), and wherein the separator (5a, 5b) is connectable to the corresponding mechanism (4a, 4b) via said portion of the connection bar (51).
